# EUROPEAN PATENT APPLICATION

(11) **EP 4 382 501 A1**
(43) Date of publication of application: **12.06.2024**
(21) Application number: 22768436.2
(22) Date of filing: 05.08.2022
(51) Int. Cl.: C04B 28/18

(54) **MORTAR COMPOSITION AND USE THEREOF IN CONSTRUCTION**

(30) Priority: 06.08.2021 ES 202130768
(71) Applicant: Tristancho Tello, María Del Carmen, 06011 Badajoz (ES); Rodríguez Lara, Lorena Laura, 06004 Badajoz (ES)
(72) Inventor: TEJADO RAMOS, Juan José, 10071 Cáceres (ES); CARMONA CARMONA, Marisa, 10071 Cáceres (ES); TRISTANCHO TELLO, María del Carmen, 06011 Badajoz (ES); RODRÍGUEZ LARA, Lorena Laura, 06004 Badajoz (ES)
(74) Representative: Clarke, Modet y Cía., S.L.
(86) International application number: PCT/ES2022/070526
(87) International publication number: WO 2023/012397

(57) **Abstract**

Mortar composition and its use in construction. The present invention relates to a mortar composition for construction comprising biomass ashes from agricultural and forestry residues, agro-industrial residues selected from almond shell or cork, resins, a binder selected from calcium oxide or calcium carbonate and water. Such a composition presents environmental advantages by employing residues of different origins in complete substitution of cement and sand, typically used in mortars. The mortar composition of the present invention can be used both in traditional construction and with 3D printers, particularly for masonry and coating.

## Description

### FIELD OF THE INVENTION

The present invention belongs to the technical field of construction materials and, more specifically, to a mortar composition comprising biomass ashes from agricultural and forestry residues, and agro-industrial residues such as almond shells or cork, and its use in construction.

### BACKGROUND OF THE INVENTION

The great challenge of the European Union's Circular Economy Action Plan is to maximize the value of materials and resources for as long as possible, returning them to the life cycle through transformation or recycling and thus minimizing the generation of residues.

The circular economy is closely linked to sustainability and applying it to construction is of the utmost importance, since this sector has one of the most important consumption of resources and, in turn, is one of the sectors that generates the most residues.

To achieve sustainable construction, the environmental impact that occurs in all steps of construction must be considered, from obtaining the materials to the used construction methods. Sustainable development can be achieved by using raw materials and renewable energies, reducing the amount of matter and energy used for the extraction of natural resources and in the proper management, destruction or recycling of residues.

An example is agricultural residues, which is usually made up of straw (leaves and stems) and fruit peels. Some agricultural residues also include bagasse, cobs, seeds, pods, and shells. It can be said that large quantities of these residues are available and that, by making a correct selection and adequate treatment of them, construction materials of great added value could be determined and provided [1].

There are different documents in the state of the art that have studied the possible use of organic residues from agro-industries, such as almond shells [2], cork dust [3] or rice husks [4], as additives or partial substitutes to some components for the manufacture of concretes, mortars and other conventional materials used in construction.

Among the most studied agricultural residues for use in construction is rice husk and more specifically rice husk ash. The degradation by composting of the husk is slow and one of the ways to eliminate this residue is by combustion, where about from 13% to 29% of rice husk ash is generated based on the weight of rice husk burned. Among the characteristics that stand out the most in this residue is its high silica content, which makes it suitable for use in cementitious systems, as has been shown in a large number of investigations [5-8].

On the other hand, research [9] has emerged on the use of rice straw, which is the set of stems, leaves and roots, in the construction sector. Rice straw is an agricultural residue that has no monetary value, so it is not managed properly, since it is commonly burned in the open air, emitting gases into the atmosphere in addition to particulate pollution. The burning of rice straw does not solve the entire problem of the existence of this residue because a remnant known as rice straw ash remains.

The investigations carried out [9] have focused on analyzing rice straw ash as a possible pozzolanic material for use as an addition in Portland cement mixtures. However, a total replacement of cement by rice straw ash is not achieved (10-30% substitutions are evaluated), so, although it solves some environmental problems, others such as CO₂ emissions for the manufacture of cement remain unresolved.

In the trials reported on the inclusion of almond shell [2] instead of sand, it was observed that said substitution worsens the characteristics of the material, except with substitutions of 10%, which minimally improves the resistance to indirect traction and with substitutions of 30% that improves thermal conductivity. In addition, the porosity of the almond shell causes an increase in the material's water absorption capacity, affecting its durability.

In other words, in order to achieve adequate and/or optimal properties of the construction material, it is necessary for the sand to be partially replaced by almond shells (10-30% of almond shells), which implies continuing to use a high quantity of sand (in this case between 70-90%). This is a disadvantage, since in recent years the concern about the scarcity of sand has increased and a controlled use of said raw material is beginning to be necessary.

Therefore, there is a need for new construction materials that include in their composition raw materials from residues of agricultural or forestry activities, as well as by-products from other industries, such as the agri-food industry, which completely replace components such as sand or cement, obtaining much more ecological materials for a more efficient, sustainable and high-quality construction.

### DESCRIPTION OF THE INVENTION

The present invention solves the problems present in the state of the art by providing a mortar composition in which sand and cement are not incorporated, as is traditionally done, but in complete replacement of these component biomass ashes of agricultural and forestry residues and agro-industrial residues such as almond shells or cork are used. This substitution is total, not partial as described in the state of the art.

Thanks to this new mortar composition, the problem of overexploitation of sand resources and environmental problems associated with CO₂ emissions for the manufacture of cement are solved.

Additionally, the problem of polluting residues (ash) from agricultural and forestry biomass companies is solved, thanks to its reuse, adapting to the new environmental demands.

The mortar composition of the present invention adapts to the new construction conditions and trends, such as construction with 3D printers, to adopt the forms that are required in the shortest possible time and as a result, better efficiency and lower costs of construction are achieved thus further reducing the carbon footprint of the works in which it is used.

In a first aspect, the present invention relates to a mortar composition comprising biomass ash from agricultural and forestry residues, selected agro-industrial residues of almond shell or cork, resins, a binder selected from calcium oxide or calcium carbonate and water.

In another aspect of the invention, the agro-industrial residues of the mortar composition are added in powder form.

In another aspect of the invention, the biomass ashes from agricultural and forestry residues in the mortar composition of the present invention are rice straw ashes.

The resins used can be any type of resin compatible with its final use.

In another aspect of the invention, the mortar composition further comprises synthetic fibers. Some examples of such fibers are polyvinyl, polypropylene, polyester, nylon, or polyurethane fiber, carbon fiber, or fibers that include carbon nanotubes or graphene.

In another aspect of the invention, the mortar composition further comprises natural fibers of vegetable, animal or mineral origin. This group includes all those fibers of vegetable origin such as straw fibers from different crops (such as corn, rice or wheat), bamboo fibers, seeds (such as cotton and coconut) or fibers derived from wood. As for the fibers of animal origin, these are extracted from wool, hair, silk and other filaments. On the other hand, mineral fibers include fiberglass and precious metal fibers, such as gold and silver.

In another aspect of the invention, the mortar composition further comprises metal fibers.

Said fibers (synthetic, natural and metallic) will be selected based on the final application of the composition.

In another aspect of the invention, the mortar composition further comprises additives selected from the group comprising plasticizers or superplasticizers, water retention agents, thickeners, biocides, dispersants, water repellent agents, pigments, accelerators and/or retarders, or mixture of them. These additives are incorporated into the composition of the present invention in any compatible form, such as powder, gel or liquid form.

In another aspect, the present invention relates to the use of the mortar composition, described above, as a construction material.

In another aspect, the composition can be used as a coating mortar. Said composition can be used as a coating and decoration for all types of walls and sidewalls, both for exteriors and interiors, as well as in new works, reforms or rehabilitations.

In a final aspect, the composition can be used as a masonry mortar. In other words, the composition can be used for grouting and fixing masonry pieces on walls, pillars and partitions.

### DESCRIPTION OF EMBODIMENTS

Having described the present invention, it is further illustrated by the following example. The purpose of the example set forth below is to illustrate the invention, without thereby limiting its scope.

### Example 1

Specimens were prepared with the mortar composition of the present invention, more specifically, a sample with the following composition: 275 g of biomass ash from forest and agricultural residues, 200 g of almond shells in powder format, 150 g of CaO, 200 g of resin and 250 g of water.

Subsequently, different tests were carried out with the specimens in accordance with the UNE-EN-1015 standard, relating to masonry mortar tests.

More specifically, tests were carried out to determine the dry apparent density of the hardened mortar (Standard UNE-EN-1015-10), resistance to bending and compression of the hardened mortar (Standard UNE-EN-1015-11) and absorption coefficient of water by capillarity of the hardened mortars (Standard UNE-EN-1015-18). The values obtained are represented in Table 1.

**Table 1. Results obtained in the tests carried out on a sample of the mortar composition of the present invention**

| **Property** | **Magnitude** | **Normative UNE** |
|---|---|---|
| **Compressive strength (MPa)** | > 5 | EN 1015-11 |
| **Water absorption by capillarity (kg/m²·min^{0.5})** | < 0.3 | EN 1015-18 |
| **Apparent dry density (kg/m³)** | < 900 | EN 1015-10 |

Taking into account the values obtained, a classification of the mortar was carried out in accordance with the UNE-EN 998-1 standard, which classifies this material according to its compressive strength and its absorption of water by capillarity. The classification and values are found in table 2.

**Table 2. Values and category according to the UNE EN 998-1 standard for the composition of the mortar of the present invention**

| **Property** | **Categories** | **Values of the UNE EN 998-1 standard** | **Values of the mortar composition of the present invention** |
|---|---|---|---|
| **Compressive strength interval at 28 days (CS)** | CS I | 0.4 MPa - 2.5 MPa | - |
| | CS II | 1.5 MPa- 5.0 MPa | > 5 MPa |
| | CS III | 3.5 MPa - 7.5 MPa | - |
| | CS IV | ≥ 6 MPa | - |
| **Water absorption by capillarity (W)** | W 0 | Not specified | - |
| | W 1 | c≤ 0.40 kg/m²·min^{0.5} | < 0.3 kg/m²·min^{0.5} |
| | W 2 | c≤ 0.20 kg/m²·min^{0.5} | - |

The value of water absorption by capillarity (category W 1) of the mortar composition of the present invention indicates that it can be used as a coating with medium resistance to filtration.

Taking into account the compressive strength obtained value (see Table 1 or Table 2), and the classification of the UNE-EN 998-2 standard on masonry mortar specifications, the mortar composition of the present invention would be classified as M-5. This classification indicates that the mortar can be used as a common masonry mortar.

In summary, the obtained results demonstrate that the mortar composition of the present invention has the appropriate physical and chemical properties to be used in construction.

### BIBLIOGRAPHIC REFERENCES

[1] J. Roselló, L. Soriano, M. P. Santamarina, J. L. Akasaki, J. Monz6, and J. Payá, "Rice straw ash A potential pozzolanic supplementary material for cementing systems," Ind. Crops Prod., vol. 103, pages 39-50, 2017.
[2] Molina Salinas, Javier Eduardo; Eguez, Hugo. "Adición de ceniza de cascarilla de arroz en hormigón compactado con rodillo". 2002. Bachelor's thesis.
[3] González, B., et al. "Ensayos de hormigones fabricados con polvo de corcho". Building Materials, 2007, vol. 57, no 286, page 83-90.
[4] Bustos, Arturo. "Aprovechamiento de residues orgánicos (cáscara de almendra) para sustitución de árido grueso en la elaboración de hormigón conventional". Building Annals, 2016, vol. 2, no 3, page 1-8.
[5] R. Khan, A. Jabbar, I. Ahmad, W. Khan, A. N. Khan, and J. Mirza, "Reduction in environmental problems using rice-husk ash in concrete," Constr. Build. Mater., vol. 30, pages 360-365, 2012.
[6] G. Rodriguez De Sensale, "Effect of rice-husk ash on durability of cementitious materials," Cem. concr. Compos., vol. 32, no. 9, pages 718-725, 2010.
[7] B. H. Abu Bakar, M. J. MegatAzmi, and P. J. Ramadhansyah, "Effect of rice husk ash fineness on the chemical and physical properties of concrete," Mag. concr. Res., Vol. 63, no. 5, pp. 313-320, 2011.
[8] F. Baeza, J. Payá, O. Galao, J. M. Saval, and P. Garcés, "Blending of industrial waste from different sources as partial substitution of Portland cement in pastes and mortars," Constr. Build. Mater., vol. 66, no. 66, pages 645-653, 2014.
[9] Samantha Elizabeth Hidalgo Astudillo "Evaluación de la reactividad puzolánica de la ceniza de paja de arroz". Construction engineering and civil engineering projects. Polytechnic University of Valencia (2018).

## Claims

1. Mortar composition for construction **characterized in that** biomass ashes from agricultural and forestry residues, agro-industrial residues selected from almond shells or cork, resins, a binder selected from calcium oxide or calcium carbonate and water.

2. The mortar composition according to claim 1, **characterized in that** the agro-industrial residues are added to the composition in powder form.

3. The mortar composition according to any of claims 1 or 2, **characterized in that** the biomass ashes of agricultural and forestry residues are rice straw ashes.

4. The mortar composition according to any of claims 1 to 3, **characterized in that** the composition further comprises synthetic fibers.

5. The mortar composition according to any of claims 1 to 3, **characterized in that** the composition further comprises natural fibers of vegetable, animal or mineral origin.

6. The mortar composition according to any of claims 1 to 3, **characterized in that** the composition further comprises metal fibers.

7. The mortar composition according to any of claims 1 to 6, **characterized in that** the composition further comprises additives selected from the group comprising plasticizers or superplasticizers, water retention agents, thickeners, biocides, dispersants, water repellent agents, pigments, accelerators and/or retarders, or a mixture thereof.

8. Use of the mortar composition according to any of claims 1 to 7, as a construction mortar.

9. The use according to claim 8, as a coating mortar.

10. The use according to claim 8, as masonry mortar.
